Europäisches Patentamt

European Patent Office

Office européen des brevets

(11) Veröffentlichungsnummer: **0 223 167**
**A2**

(12) # EUROPÄISCHE PATENTANMELDUNG

(21) Anmeldenummer: **86115491.2**

(22) Anmeldetag: **07.11.86**

(51) Int. Cl.⁴: **B 65 G 69/10**

(30) Priorität: 16.11.85 DE 3540744

(43) Veröffentlichungstag der Anmeldung: **27.05.87**
**Patentblatt 87/22**

(84) Benannte Vertragsstaaten: **CH DE ES FR GB LI**

(71) Anmelder: **Klöckner-Humboldt-Deutz**
**Aktiengesellschaft,**
**Deutz-Mülheimer-Strasse 111 Postfach 80 05 09,**
**D-5000 Köln 80 (DE)**

(72) Erfinder: **Riechelmann, Gundo, Dr., Am Kotten 5,,**
**D-5820 Gevelsberg (DE)**
Erfinder: **Wirsching, Knut, Ilsederweg 6,**
**D-3153 Laustedt 3 (DE)**

(74) Vertreter: **Beisner, Klaus, Dipl.-Ing. et al, c/o KHD**
**Humboldt Wedag AG Patente und Lizenzen**
**Wiersbergstrasse Postfach 91 04 57,**
**D-5000 Köln 91 (DE)**

(54) **Verfahren zum Homogenisieren von Schüttgut auf einer Halde.**

(57) Wenn beim Haldenaufbau die Schwenkgeschwindigkeit des Absetzers so gesteuert wird, daß auf der Grundfläche bis zu einer Höhe $h^*$ zunächst Kegelschalen und danach bis zur vollen Haldenhöhe $h_{max}$ ebene Schichten konstanter Dicke aufgeschüttet werden, kann im Haldenauslauf $1_A$ mindestens die gleiche Menge Schüttgut wie bei anderen Absetzverfahren gespeichert werden unter der Nebenbedingung, daß beim Abbau der Halde die gleiche Homogenisierwirkung erzielt werden kann, nämlich daß die gleiche Anzahl verschiedener Schichten angeschnitten wird.

Darüber hinaus ist der vertikale Schwenkweg $(h_{max} - h^*)$ des Absetzers kleiner; auf eine Höhensteuerung kann sogar deswegen häufig verzichtet werden.

0223167

Anlage zum Patentgesuch der        - 1 -        K H D
Klöckner-Humboldt-Deutz                        H 85/70
Aktiengesellschaft

Verfahren zum Homogenisieren von Schüttgut auf einer
Halde

---

Die Erfindung betrifft ein Verfahren zum Homogenisieren
von Schüttgut durch Zwischenspeichern in einer Halde,
bei dem das Schüttgut vom Haldenfirst her bei einer in
Richtung des Haldenauslaufs stufenweise
fortschreitenden Bewegung eines Absetzers aufgeschüttet
wird, dabei Schichten mit dem natürlichen
Böschungswinkel des Schüttgutes gebildet werden und das
Schüttgut an der Basis der anderen Haldenseite
abgetragen wird.

Neben dem Ausgleich von Produktionsschwankungen dient
das Zwischenlagern von Schüttgut auf einer Halde
hauptsächlich der Vergleichmäßigung des Schüttgutes.
Man versucht beim Abbau der schichtweise aufgebauten
Halde, Schüttgut aus verschiedenen Schichten
gleichzeitig zu entnehmen. Der Homogenisiereffekt ist
um so größer, je mehr Schichten dabei gleichzeitig
"angeschnitten" werden.

Bei der Rückladung des Schüttgutes wird gewöhnlich das Material an der Basis abgetragen. Die Neigung der Halde auf dieser Seite ist durch den natürlichen Böschungswinkel $\beta$ für das spezielle Schüttgut festgelegt, und damit liegt auch fest, wie viele verschiedene Schichten gleichzeitig offen liegen können. Je dünner die Schichten sind, und damit je höher deren Zahl bei einer bestimmten Haldenhöhe ist, um so besser ist die erreichbare Vergleichmäßigung.

Andererseits ist durch den Aufbau einer Halde mit vielen Schichten ein langer Haldenauslauf bedingt, und da im Haldenauslauf die spezifische Speicherkapazität stark abnimmt, erfordert eine Halde mit einem großen Haldenauslauf eine größere Grundfläche.

Hinsichtlich der Platzausnutzung ist das sogenannte Kegelschalenverfahren unerreicht. Es werden dabei gewöhnlich durch stufenweises Vorrücken des Absetzens um eine Strecke $\Delta$ 1 Kegelhalbschalen aufgeschüttet. Der natürliche Böschungswinkel $\beta$ und die zur Verfügung stehende Breite b des Lagerplatzes begrenzen die maximale Haldenhöhe auf $h_{max} = b/2 \tan\beta$. Andererseits ist die Homogenisierungswirkung oft nicht ausreichend, weil beim Abbau zu wenig verschiedene Schichten angeschnitten werden.

In der Deutschen Patentschrift 14 32 040 ist ein Verfahren zum kontinuierlichen Homogenisieren von körnigem Schüttgut beschrieben, bei welchem das Schüttgut auf ortsfester Lagerstelle zu einem Haufen in zueinander im wesentlichen parallelen, lose geschütteten Schichten von etwa gleicher Dicke stetig aufgetragen und davon gleichzeitig in zueinander ebenfalls parallelen, mit der Richtung der Austragsschichten einen bestimmten Winkel bildenden Abtragsschichten abgetragen wird, wobei das Schüttgut in zur Waagerechten geneigten Schichten durch eine Schwenkbewegung des Absetzers auseinander gezogen wird. Je kleiner die Steigung $\delta$ der Schichten ist, um so besser ist die Vergleichmäßigung. Mit abnehmendem Winkel $\delta$ nimmt aber die Länge des Haldenauslaufs $l_A$, über den der Absetzer geschwenkt werden muß, zu. Auf der anderen Seite kann $\delta$ maximal gleich $\beta$ , dem natürlichen Schüttgutwinkel, sein. Dieser Grenzfall führt zu dem oben beschriebenen Kegelschalenverfahren ohne Schwenken.

Bei einem anderen bekannten Verfahren (DE 30 11 139 C2) schwenkt der Absetzer mit konstanter Geschwindigkeit, was den Aufbau einer Halde mit (in Haldenrichtung) parabelförmigen Schichten zur Folge hat.

Bei den beiden zuletzt erwähnten Schwenkverfahren muß wegen des hohen Fallweges beim Aufbau der Schicht im Bereich des Haldenauslaufes zum Schutz von empflindlichen Schüttgut der Absetzer höhengesteuert werden.

Aufgabe der Erfindung ist ein Verfahren, nach dem eine Halde mit vielen Schichten und einem möglichst kurzen Auslaufende aufgebaut werden kann, wobei die Schwenkbewegung in Haldenrichtung möglichst klein sein soll und für den die Höhenverstellung des Absetzers auch möglichst klein sein soll bzw. ganz entfallen kann.

Die Aufgabe wird von einem Verfahren gelöst, das dadurch gekennzeichnet ist, daß der Absetzer, wenn eine Kugelschale mit der Höhe ($h^*$) erreicht ist, zur vollständig aufgeschütteten Halde mit der maximalen Haldenhöhe ($h_{max}$) hin bewegt wird, wobei im stationären Zustand der Schwenkweg ($l_{sch}$) von der Haldenhöhe ($h^*$) bis zur maximalen Haldenhöhe ($h_{max}$) immer gleich ist, nach Erreichen der maximalen Haldenhöhe ($h_{max}$) der Absetzer um eine Stufe ($\Delta l$) zum Haldenauslauf hin verschoben, zum Haldenauslauf hin um den Schwenkweg ($l_{sch}$) verfahren und am Ende so lange angehalten wird, bis wiederum eine Schale der Höhe $h^*$ mit dem natürlichen Böschungswinkel ($\beta$) aufgebaut ist, wobei die Schwenkgeschwindigkeit beim Hin- und Herschwenken jeweils so gesteuert wird, daß die Dicke der abgesetzten Schicht konstant bleibt, und dann der ganze Zyklus wiederholt wird.

Bevorzugt liegt der First $h^*$ der Kugelschale mit dem natürlichen Böschungswinkel zwischen 1/4 und 3/4 der Gesamthöhe $h_{max}$ der Halde. Besonders bevorzugt ist eine Höhe $h^*$ erzeugt durch den Firstneigungswinkel $\gamma$ = 1/2 $\delta$ und den Schüttwinkel $\beta$ bei $l_A$ = 2/3 r $\pi$ .

Von Vorteil ist beim erfindungsgemäßen Verfahren eine mindestens gleichgute Homogenisierwirkung wie bei bekannten Verfahren, es kann jedoch in vielen Fällen auf die Höhenverstellbarkeit des Absetzers verzichtet werden, weil die maximale freie Fallhöhe größenordnungsmäßig nur die halbe Haldenhöhe ist. Auch die horizontale Schwenkweite ist kleiner als bei anderen bekannten Verfahren. Andererseits ist der Haldenauslauf wesentlich besser gefüllt, als bei dem Verfahren mit konstanter Schichtdicke oder parabelförmigen Haldenauslauf. Zahlenmäßig ist auf den beachtlichen Volumenzuwachs des Haldenauslaufs im Beispiel eingegangen.

Ohne Behinderung des Rückladegerätes können Endloshalden weiter gefüllt werden.

Zur weiteren Erläuterung der Erfindung dient das in der Zeichnung beschriebene Beispiel.

Es zeigen:

Fig. 1: Aufbau des Haldenauslaufes mit "gestreckten" Schichten gleicher Dicke.

Fig. 2: Aufbau des Haldenauslaufs bei konstanter Schwenkgeschwindigkeit des Absetzers.

Fig. 3: Aufbau des Haldenauslaufs nach dem erfindungsgemäßen Verfahren.·

Fig. 4: Die vom Haldenauslauf einer Kreishalde beanspruchte Fläche bei Halden, die nach verschiedenen Verfahren aufgebaut sind.

Fig. 5: Vergleich des Firstverlaufes vom Haldenauslauf bei Halden, die nach verschiedenen Verfahren aufgebaut sind.

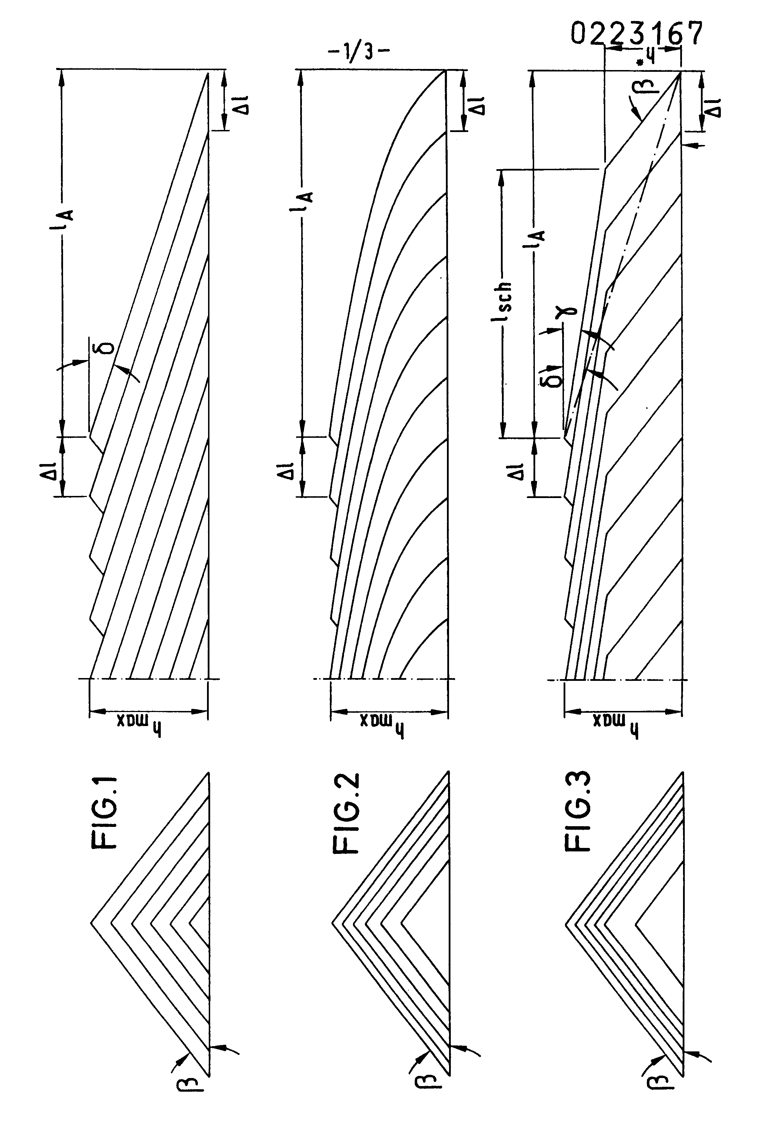

Die Halde nach Fig. 1 hat eine gewisse Ähnlichkeit mit dem Kegelschalenverfahren; dort wäre die Schichtneigung $\delta$ identisch mit dem natürlichen Böschungswinkels $\beta$ des Schüttgutes. Sobald eine Schicht der Höhe $h_{max}$ aufgeschüttet ist, wird der Absetzer um die Stufe $\Delta$ l zum Auslaufende hin verschoben. Je weiter das eingelagerte Material in einer Schicht bei konstanter Haldenhöhe auseinander gezogen werden soll, um so kleiner muß $\delta$ gewählt werden, um so länger wird der Haldenauslauf. Zur Erzeugung eines langen gleichmäßigen Haldenauslaufs muß die Schwenkgeschwindigkeit des Absetzers längs des Weges $l_A$ geregelt werden. Ohne Höhensteuerung des Absetzers würde am Fuß des Haldenauslaufs das Schüttgut die Strecke $h_{max}$ frei durchfallen; auf eine Höhensteuerung des Absetzers kann daher nur in den seltensten Fällen verzichtet werden.

Bei dem Verfahren nach der DE 30 11 349 C2, das in der Fig. 2 dargestellt ist, ist aus den gleichen Gründen auch in der Regel eine Höhenregelung erforderlich.

Um die bekannten und das erfindungsgemäße Verfahren untereinander vergleichen zu können, sind in den Beispielen folgende Randbedingungen berücksichtigt: Die zur Verfügung stehende Breite b und der natürliche Schüttgutwinkel $\beta$ sind vorgegeben. Damit errechnet sich eine maximale Haldenhöhe $h_{max}$ zu $h_{max} = b/2 \cdot \tan\beta$. Damit auch die Homogenisiereffekte vergleichbar sind, sollen beim Haldenabbau unter dem natürlichen Böschungswinkel immer gleichviel verschiedene Schichten angeschnitten werden. Der Haldenauslauf $l_A$ ist in allen Fällen gleich lang.

Auch für das erfindungsgemäße Verfahren in Fig. 3 gelten die eben erwähnten Randbedingungen. Die Zahl der Schichten im Schnitt ist die gleiche wie bei den anderen Verfahren, ebenso die Sprungweite $\Delta l$ und die Haldenhöhe $h_{max}$ (und damit automatisch die Zahl der Schichten $N = l_A / \Delta l$; die Länge des Haldenauslaufs $l_A$ ist bei allen drei Verfahren gleich.

Der Schwenkbereich $l_{sch}$ ist bei dem erfindungsgemäßen Verfahren kürzer als bei den anderen Verfahren, wo $l_{sch}$ identisch mit $l_A$ ist. Der Neigungswinkel $\gamma$ sollte bezogen auf den Neigungswinkel $\delta$ nach dem Verfahren in Fig. 1 bevorzugt in einem Bereich zwischen $\gamma/2$ und $2/3 \gamma$ liegen. Der maximale Fallweg des Schüttgutes vermindert sich bei dem erfindungsgemäßen Verfahren von $h_{max}$ auf $h_{max} - h^*$ Für viele Schüttgüter ist diese reduzierte Fallhöhe noch so klein, daß sie beim Absetzen nicht zu hoch beansprucht werden.

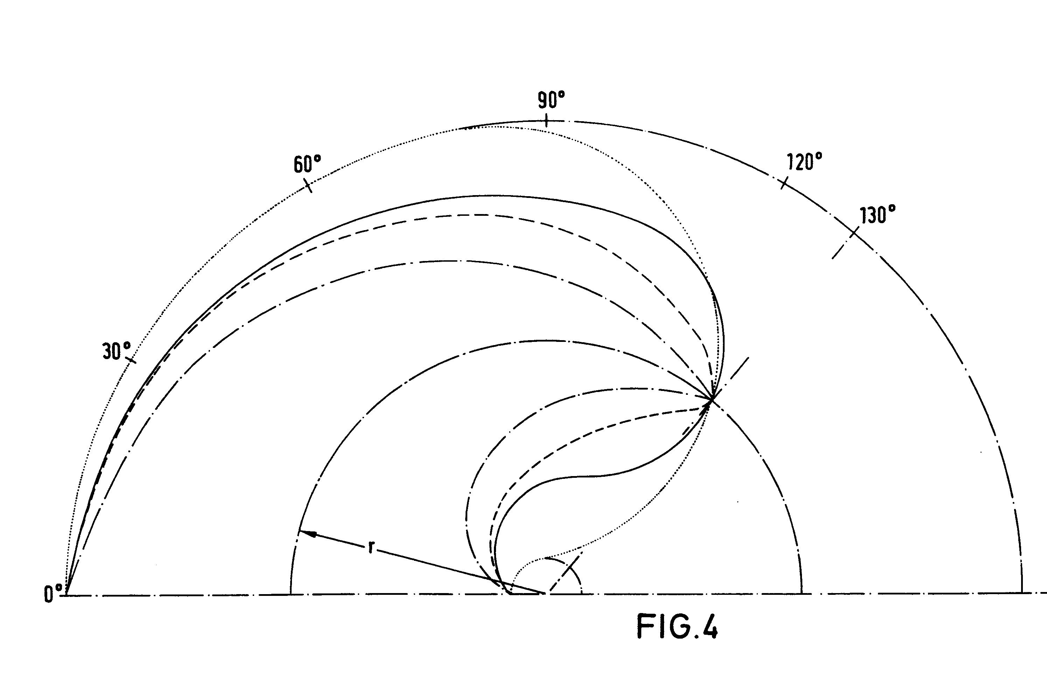

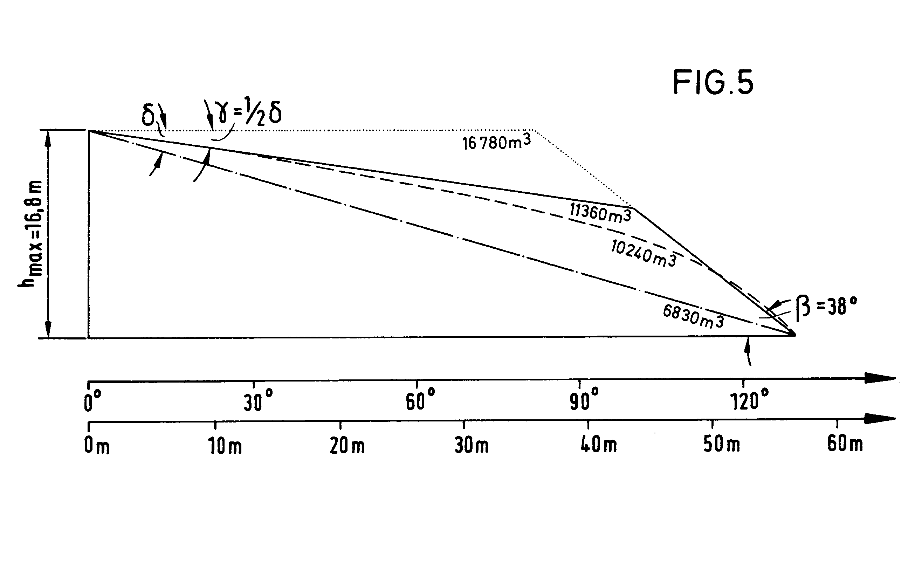

Der besondere Vorteil des erfindungsgemäßen Verfahrens ist jedoch besonders aus dem Beispiel in Fig. 4 und Fig. 5 zu erkennen. Es wurde ein Schüttgut mit einem natürlichen Böschungswinkel von $\beta$ = 38 °angenommen. Das Schüttgut soll auf einer Rundhalde mit einem Durchmesser von 93 m zwischengespeichert und dabei homogenisiert werden. Bedingt durch den Austrag in der Mitte ist die mögliche Haldenbreite b = 43 m, was eine maximale Haldenhöhe von 16,8 m ergibt. Der Haldenfirstradius r beträgt 25 m. Die Randbedingungen hinsichtlich Schichtzahl sind die gleichen, wie in den Figuren 1 bis 3; daher ist auch der Haldenauslauf $l_A$ in allen Fällen gleich, hier 56 m bzw. 130 °.

Der Grundriß des Haldenauslaufes bei einer Halde, die nach dem erfindungsgemäßen Verfahren aufgebaut ist, ist durchgezogen eingetragen. Wenn von den Verzerrungen, die durch die Kreishalde bedingt sind, abgesehen wird, läuft die Haldenbegrenzung im höheren Teil der Halde dreiecksförmig, d. h. als Gerade, im unteren Teil kreisförmig auf die Haldenspitze zu.

Der Haldenauslauf einer Halde entsprechend Fig. 1 ist strichpunktiert; er läuft an sich dreieckig aus, bei einer Kreishalde kommt es zu spiralartigen Verzerrungen.

Bei einer Halde, die nach dem Verfahren nach DE 30 11 349 C2 aufgebaut ist, ergibt sich der strichliert gezeichnete Haldenverlauf.

0223167
K H D
H 85/70

Zusätzlich ist in Fig. 4 auch noch punktiert eine Halde mit Kegelschalen eingezeichnet. Bei einer solchen Halde ist der Haldenauslauf wesentlich kürzer (nur ca. 20 m bzw. 50 °), die Homogenisierwirkung ist jedoch geringer.

Korrespondierende Schnitte längs des Haldenfirstes im Haldenauslauf sind in Fig. 5 dargestellt. Strichart und Maßangaben sind in den Figuren 4 und 5 vergleichbar. Das Volumen des Haldenauslaufs nach dem erfindungsgemäßen Verfahren beträgt 11 360 $m^3$, bei einem Verfahren nach der DE 30 11 349 C2 10 240 $m^3$ und bei einem Verfahren nach der DE-PS 14 32 040 nur 6 830 $m^3$ (es wurde hier eine Beziehung von $\gamma = \delta/2$ angenommen). Beim Kegelschalenverfahren könnte auf der gleichen Grundfläche ein Volumen von 16 780 $m^3$ untergebracht werden, es ist aber insofern nicht mit den anderen drei Verfahren vergleichbar, da der Homogenisierungseffekt erheblich schlechter ist.

Die oben erwähnte Steuerung des Absetzers im stationären Zustand muß beim Beginn einer Halde modifiziert werden. Ein spezielles Einregeln beim Anfahren ist bei allen bekannten Verfahren erforderlich; es kann vom Fachmann unschwer an den erwünschten Haldenaufbau angepaßt werden.

Es versteht sich, daß das erfindungsgemäße Verfahren auch bei Längshalden anwendbar ist. "Endloshalden" sind bevorzugt. Sie müssen dabei nicht unbedingt kreisförmig sein, auch auf einem Oval oder einer rennbahnähnlichen Grundfläche könnte so eine Halde abgesetzt werden; die Kreishalde ist aber von der Einfachheit der Anlage her besonders bevorzugt.

Bei Endloshalden kann gemäß der Erfindung die Halde in bisher unerreichter Nähe hin an das Rückladegerät

0223167
K H D
H 85/70

herangeführt werden; neben der großen spezifischen
Lagerfähigkeit (unter Berücksichtigung einer bestimmten
Homogenisierung) sind weitere Vorteile die geringere
horizontale Verschwenkung $l_{sch}$ und die geringere
Höhenverstellung ($h_{max} - h^*$) des Absetzers, wobei
auf das Heben und Senken sogar häufig ganz verzichtet
werden kann.

Patentanspruch

1. Verfahren zum Homogenisieren von Schüttgut durch Zwischenspeichern in einer Halde, bei dem das Schüttgut vom Haldenfirst her bei einer in Richtung des Haldenauslaufs stufenweise fortschreitenden Bewegung eines Absetzers ($\Delta 1$) aufgebaut wird, dabei Schichten mit dem natürlichen Böschungswinkel ($\beta$) des Schüttgutes gebildet werden und das Schüttgut an der Basis der anderen Haldenseite abgetragen wird, dadurch gekennzeichnet, daß der Absetzer, wenn eine Kegelschale mit der Höhe ($h^*$) aufgeschüttet ist, zur vollständig aufgeschütteten Halde mit der maximalen Haldenhöhe ($h_{max}$) hin bewegt wird, wobei im stationären Zustand der Schwenkweg ($l_{sch}$) von der Haldenhöhe ($h^*$) bis zur maximalen Haldenhöhe ($h_{max}$) immer gleich ist, nach Erreichen der maximalen Haldenhöhe ($h_{max}$) der Absetzer um eine Stufe ($\Delta 1$) zum Haldenauslauf hin verschoben, zum Haldenauslauf hin um den Schwenkweg ($l_{sch}$) verfahren und am Ende so lange angehalten wird, bis wiederum eine Schale der Höhe ($h^*$) mit dem natürlichen Böschungswinkel ($\beta$) aufgebaut ist, wobei die Schwenkgeschwindigkeit beim Hin- und Herschwenken jeweils so gesteuert wird, daß die Dicke der abgesetzten Schicht konstant bleibt, und dann der ganze Zyklus wiederholt wird.

0223167

−1/3−

FIG.1

FIG.2

FIG.3

FIG.4

-1/3-

C223167

FIG.5

$\delta$  $\gamma = \frac{1}{2}\delta$

$h_{max} = 16,8\ m$

16 780 m³

11360 m³

10240 m³

6830 m³

$\beta = 38°$

0°  30°  60°  90°  120°

0 m  10 m  20 m  30 m  40 m  50 m  60 m